# EUROPEAN PATENT SPECIFICATION

(11) **EP 1 604 876 B1**
(45) Date of publication and mention of the grant of the patent: **06.06.2007**
(21) Application number: 05007272.7
(22) Date of filing: 04.04.2005
(51) Int. Cl.: B60T 7/06, G05G 1/14

(54) **Clip coupling device for the cap of the servo brake of a motor-vehicle**
Fahrzeugbremsservokupplungsanordnung
Dispositif d'accouplement pour un dispositif de freinage assisté d'un véhicule.

(30) Priority: 09.06.2004 IT TO20040078
(43) Date of publication of application: 14.12.2005
(73) Proprietor: I.M.A.M. S.p.A., 10040 Volvera (TO) (IT)
(72) Inventor: La Rosa, Giacomo, 90144 Palermo (IT); Cavaglia' Renato, 10040 Volvera (TO) (IT); Ballari, Marco, 10040 Gerbole Di Volvera (TO) (IT)
(74) Representative: Di Francesco, Gianni

(56) References cited:
- EP-A- 1 440 857
- US-A1- 2002 088 300

## Description

The present invention refers to a device adapted to couple the cap of the servo brake to the brake pedal of a motor-vehicle.

Presently, different systems adapted to couple the cap to the pedal are already known, said systems using elastic means for fast assembly providing snap-coupling, by means of a clip, of the spherical end of the cap of the servo brake into a semi-spherical seat made of plastic material and integral with said pedal.

A device of this type implies that the spherical shape of the end of the cap makes the insertion into the assembly means on the pedal easier, yet it doesn't provide resistance enough to prevent the cap from coming out from its seat. In may happen that a moderate push under the pedal be enough to make the cap coming out from the semi-spherical seat so that the brakes cannot be used any longer.

It is an object of the present invention to provide a coupling device that overcomes the aforementioned drawback.

This object, as well as further objects and advantages of the present invention that will appear more clearly in the following, is achieved by means of a coupling device adapted to engage the cap of the servo brake of a motor vehicle characterised in what it is set forth in claim one.

In the following the structural and operational characteristics of a preferred non-restrictive embodiment of the device according to the invention will be described referring to the appended drawings in which:

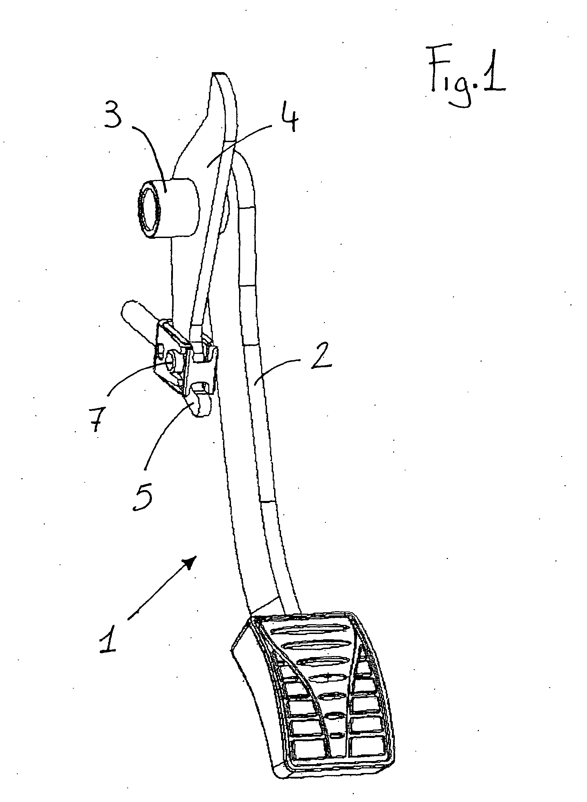

figure 1 is a perspective view of the brake pedal of a motor-vehicle in which the coupling device for the cap of the servo brake is mounted in its operational position;

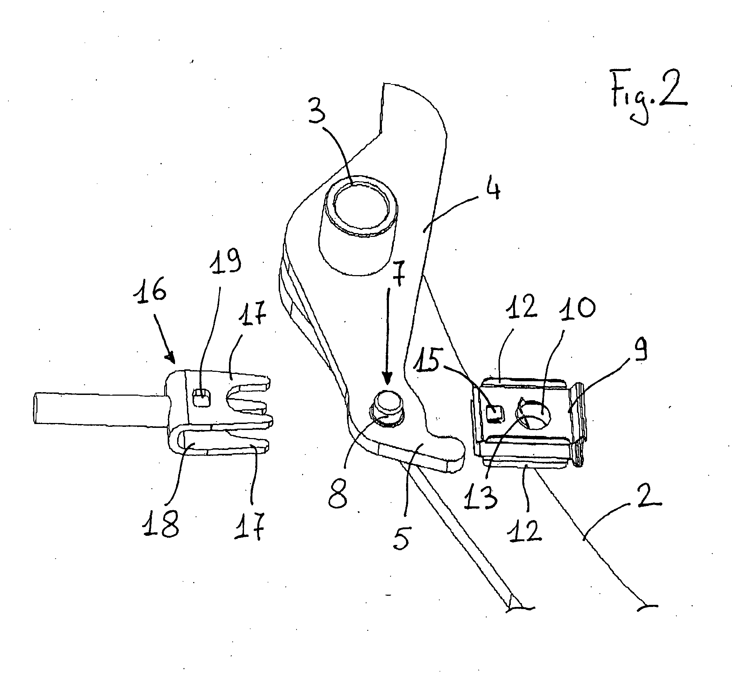

figure 2 is an exploded view of the coupling device and of the end of the cap of the servo brake;

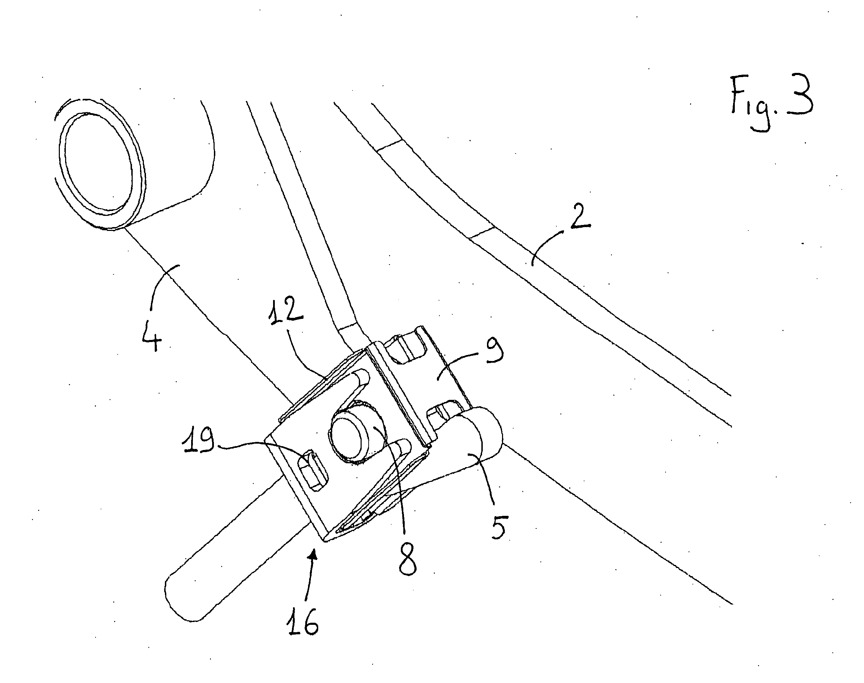

figure 3 is a magnified perspective view of the coupling device already assembled and in which the cap has been inserted.

With reference to the figures, reference number 1 indicates a brake pedal of a motor-vehicle, with the arm 2 of which a lever 4 is made rotatably integral by means of a bush, the lever being parallel to the arm 2 of the pedal. At the lower end 5 of said lever there is a through-pin 7 two parts 8 of which protrude from both sides of the lever. A U-shaped clip 9, preferably made of harmonic steel, is applied on the lower end of the lever, the clip being provided with two holes 10 on its two arms, adapted to get snap-coupled on the two protruding parts 8 of the pin 7. The shape of the lower end 5 is such that the clip, once applied on the protruding parts 8 of the pin cannot rotate on them more than 5-10 degrees, so that it is easier to mount it in the correct position. The arms of the clip are provided on both sides with a protruding limiting edge 12 while the two holes 10 present a lid 13 also protruding from the surface of the two arms. The two arms of the clip are provided also with two tongues 15 which serve as snap-couplers.

The head of the cap of the servo brake of the motor-vehicle presents a terminal part 16 shaped as a double-fork 17 and made on a sheet-steel 18 which is U-shaped so that, following the limiting edges 12, it can be inserted astride of the clip 9 in order to rest against the parts 8 protruding from the holes 10 on the clip, the lids 13 being placed between it and the clip in order to prevent wear. On the sheet-steel there are also two holes 19 the shape of which is adapted to house the snap-tongues 15 and therefore hold the final part of the cap on the clip 9, articulated on the lower end 5 of the lever 4.

The appended drawings illustrate clearly that upon applying the clip 9 on the lever 4, it will be enough to snap-insert the final part 16 on the tongues 15 of the clip to achieve a safe and stable coupling, being it easy to disengage the parts by simply pressing the two tongues 15, for instance by means of proper pliers.

## Claims

1. A device adapted to couple the cap of the servo brake to the arm of the brake pedal of a motor-vehicle, **characterised in that** it consists of a lever (4) parallel to, and rotatably integral, by means of a bush (3), with the arm of the pedal (2), said lever being provided with a through-pin (7) at its lower end where a U-shaped clip (9) is engaged by means of two holes (10).

2. A coupling device for the cap of the servo brake as claimed in claim 1, **characterised in that** the cap presents a final part (16) shaped as a double-fork (17) made on a U-shaped sheet-steel (18) adapted to be inserted astride of the clip (9).

3. A coupling device for the cap of the servo brake as claimed in claim 1 and claim 2, **characterised in that** the part of the cap which is shaped as a double fork (17) rests against the parts (8) protruding from the holes (10) on the clip (9).

4. A coupling device for the cap of the servo brake as claimed in the previous claims, **characterised in that** the holes (10) of the clip (9) are provided with a protruding lid (13) adapted to be placed between the double fork of the cap and the parts (8) of the through pin (7).

5. A coupling device for the cap of the servo brake as claimed in the previous claims, **characterised in that** the clip is provided with tongues (15) to be snap-coupled with holes (19) made on the final part (16) of the cap which is shaped as a double fork.

## Patentansprüche

1. Vorrichtung zur Verbindung der Kappe des Bremsverstärkers mit dem Arm des Bremspedals eines Kraftfahrzeugs, **dadurch gekennzeichnet, dass** sie aus einem Hebel (4) besteht, der parallel zu dem Arm (2) des Pedals verläuft und mit diesem Arm mittels einer Muffe (3) drehverbunden ist, wobei der Hebel an seinem unteren Ende, an dem eine U-förmige Klammer (9) mittels zwei Bohrungen (10) in Eingriff gebracht wird, mit einem durchgehenden Stift (7) versehen ist.

2. Verbindungsvorrichtung für die Kappe des Bremsverstärkers nach Anspruch 1, **dadurch gekennzeichnet, dass** die Kappe einen die Form einer doppelten Gabel (17) aufweisenden Endteil (16) aufweist, der aus einem U-förmigen Blech (18) hergestellt ist und die Klammer (9) übergreifend auf diese stülpbar ist.

3. Verbindungsvorrichtung für die Kappe des Bremsverstärkers nach Anspruch 1 und 2, **dadurch gekennzeichnet, dass** der die Form einer doppelten Gabel (17) aufweisende Teil der Kappe an den aus den Bohrungen (10) in der Klammer (9) herausragenden Teilen (8) anliegt.

4. Verbindungsvorrichtung für die Kappe des Bremsverstärkers nach einem der vorstehenden Ansprüche, **dadurch gekennzeichnet, dass** die Bohrungen (10) der Klammer (9) mit einem vorstehenden Deckel (13) versehen sind, der zwischen der doppelten Gabel der Kappe und den Teilen (8) des durchgehenden Stifts (7) einsetzbar ist.

5. Verbindungsvorrichtung für die Kappe des Bremsverstärkers nach einem der vorstehenden Ansprüche, **dadurch gekennzeichnet, dass** die Klammer mit Zungen (15) versehen ist, welche in Bohrungen (19) einrasten, die in dem die Form einer doppelten Gabel aufweisenden Endteil (16) der Kappe eingebracht sind.

## Revendications

1. Dispositif conçu pour accoupler la coiffe d'un servofrein au bras de la pédale de frein d'un véhicule automobile, **caractérisé en ce qu'**il est constitué d'un levier (4) parallèle au bras de la pédale (2) et pouvant tourner d'un seul tenant avec celui-ci à l'aide d'un coussinet (3), ledit levier étant doté d'une tige traversante (7) à son extrémité inférieure, où est engagée une attache en forme de U (9) à l'aide de deux trous (10).

2. Dispositif d'accouplement pour la coiffe d'un servofrein selon la revendication 1, **caractérisé en ce que** la coiffe présente une partie terminale (16) configurée sous la forme d'une double fourche (17) réalisée à partir d' une tôle d'acier en forme de U (18) conçue de manière à être insérée à califourchon sur l'attache (9).

3. Dispositif d'accouplement pour la coiffe du servofrein selon l'une quelconque des revendications 1 et 2, **caractérisé en ce que** la partie de la coiffe qui est configurée sous la forme d'une double fourche (17) repose contre les parties (8) faisant saillie par rapport aux trous (10)ménagés sur l'attache (9).

4. Dispositif d'accouplement pour la coiffe du servofrein selon l'une quelconque des revendications précédentes, **caractérisé en ce que** les trous (10) de l'attache (9) sont dotés d'un couvercle en saillie (13) conçu pour être placé entre la double fourche de la coiffe et les parties (8) de la tige traversante (7).

5. Dispositif d'accouplement pour la coiffe du servofrein selon l'une quelconque des revendications précédentes, **caractérisé en ce que** l'attache (9) est dotée de languettes (15) destinées à être accouplées par encliquetage avec les trous (19) ménagés sur la partie terminale (16) de la coiffe qui est configurée sous la forme d'une double fourche.
